Europäisches Patentamt

European Patent Office

Office européen des brevets

(11) Veröffentlichungsnummer: **0 337 208**
**A2**

(12) # EUROPÄISCHE PATENTANMELDUNG

(21) Anmeldenummer: **89105655.8**

(51) Int. Cl.4: **C08L 67/02**

(22) Anmeldetag: **30.03.89**

(30) Priorität: **12.04.88 DE 3812052**

(43) Veröffentlichungstag der Anmeldung:
**18.10.89 Patentblatt 89/42**

(84) Benannte Vertragsstaaten:
**CH DE FR GB IT LI NL**

(71) Anmelder: **BAYER AG**

**D-5090 Leverkusen 1 Bayerwerk(DE)**

(72) Erfinder: **Bushong, William, Dr.**
**Bodelschwinghstrasse 14**
**D-4150 Krefeld(DE)**
Erfinder: **Piejko, Karl-Erwin, Dr.**
**Unterscheider Weg 7a**
**D-5060 Bergisch Gladbach 2(DE)**
Erfinder: **Sümmermann, Klaus, Dr.**
**Von-Steinen-Strasse 1**
**D-5758 Fröndenberg-Frömern(DE)**
Erfinder: **Kirsch, Jürgen, Dr.**
**Hahnenweg 1**
**D-5000 Köln 80(DE)**
Erfinder: **Westeppe, Uwe, Dr.**
**Yorckstrasse 19**
**D-5630 Remscheid 11(DE)**
Erfinder: **Lindner, Christian, Dr.**
**Riehler Strasse 200**
**D-5000 Köln 60(DE)**

(54) **Thermoplastische Formmassen.**

(57) Die erfindungsgemäßen thermoplastischen Formmassen enthaltend
A) einen thermoplastischen Polyester sowie
B) ein thermoplastisches Copolymer hergestellt aus
B1) gegebenenfalls substituiertem Styrol, $\alpha$-Methylstyrol, Acrylnitril, Methacrylnitril, Vinyl-$C_1$-$C_4$-carbonsäureestern, Methacrylsäure-$C_1$-$C_8$-alkyl oder $C_5$-$C_6$-cycloalkylestern und/oder Maleinsäurederivaten und
B2) mindestens einer epoxydhaltigen Vinylverbindung
zeichnen sich insbesondere durch eine hohe Zug- und Biegefestigkeit sowie Wärmeformbeständigkeit bei ansonsten gleichbleibendem Polyester-Eigenschaftsprofil aus und können zur Herstellung von Formkörpern verschiedenster Art verwendet werden.

EP 0 337 208 A2

## Thermoplastische Formmassen

Die Erfindung betrifft thermoplastische Formmassen aus teilkristallinen oder amorphen Polyestern und thermoplastischen Copolymeren mit copolymerisierten epoxydhaltigen Vinylmonomeren.

Polyester enthaltende thermoplastische Formmassen werden in der Technik in großem Maße als Werkstoffe für Formteile mit hoher mechanischer Belastung eingesetzt. Um den hohen mechanischen Belastungen bei Einsatz für solche Formteile zu genügen, werden polyesterhaltige thermoplastische Formmassen sehr häufig mit Verstärkungsmitteln wie mineralische, anorganische Füllstoffe in bekannter Weise abgemischt. Nachteilig dabei ist jedoch, daß die Zähigkeit der verstärkten Formmassen oft ungenügend ist, sich die Formmassen nur schwierig verarbeiten lassen und häufig die Oberflächen der Formkörper gestört sind.

Aufgabe der vorliegenden Erfindung war es daher, thermoplastische Polyester enthaltende Formmassen zur Verfügung zu stellen, die sich durch eine gute Steifigkeit und Festigkeit auch bei höheren Temperaturen und unter Beanspruchung auszeichnen, bei ansonsten gleichbleibendem Polyester-Eigenschaftsprofil, wie u.a. gute Zähigkeit und Verarbeitbarkeit.

Überraschend wurde nun gefunden, daß diese Aufgabe gelöst wird durch die Bereitstellung thermoplastischer Formmassen enthaltend

A) thermoplastische Polyester sowie

B) thermoplastische Copolymere hergestellt aus

B1) gegebenenfalls substituiertem Styrol, $\alpha$-Methylstyrol, Acrylnitril, Methacrylnitril, Vinyl-$C_1$-$C_4$-carbonsäureestern, Methacrylsäure-$C_1$-$C_8$-alkyl- oder $C_5$-$C_6$-Cycloalkylestern und/oder Maleinsäurederivaten und

B2) mindestens einer epoxydhaltigen Vinylverbindung.

Die erfindungsgemäßen thermoplastischen Formmassen können neben den erwähnten Komponenten A) und B) noch als Komponente C) ein Kautschukpolymerisat enthalten, um insbesondere die Schlagzähigkeit der Formmassen noch zu erhöhen.

Die erfindungsgemäßen Formmassen enthalten im allgemeinen die Komponente A) in einer Menge von 5 bis 95 Gew.-%, bevorzugt 10 bis 85 Gew.-%, besonders bevorzugt 15 bis 80 Gew.-% und die Komponente B) in einer Menge von 5 bis 95 Gew.-%, bevorzugt 15 bis 90 Gew.-%, besonders bevorzugt 20 bis 85 Gew.-%. Die Komponente C) kann in einer Menge von bis zu 35 Gew.-%, bevorzugt 1 bis 35 Gew.-%, besonders bevorzugt 10 bis 30 Gew.-%, in den erfindungsgemäßen Formmassen enthalten sein.

Das Mischungsverhältnis der Komponente A) und B) kann in weiten Bereichen variiert werden und wird im wesentlichen durch das gewünschte Eigenschaftsprofil der erfindungsgemäßen thermoplastischen Formmassen bestimmt. So weisen thermoplastische Formmassen, die einen Anteil an Komponente B) von größer 50 Gew.-% besitzen eher die wesentlichen Eigenschaften des thermoplastischen Copolymeren B) auf, wobei allerdings einige der Eigenschaften verbessert sind. Beispielsweise wird durch die Abmischung mit der Komponente A) die Chemikalienbeständigkeit, z.B. gegenüber Methanol oder Dekalin (in letzterem sind ausgewählte Copolymere des Typs B) oft nicht beständig), verbessert. Bevorzugte Mischungen mit überwiegendem thermoplastischen Copolymeranteil enthalten 5 bis 45 Gew.-%, bevorzugt 10 bis 40 Gew.-%, insbesondere 15 bis 35 Gew.-% an thermoplastischem Polyester A).

Thermoplastische Formmassen mit einem Polyesteranteil von größer als 50 Gew.-% zeigen polyestertypische Eigenschaften wie hohe Abriebfestigkeit und gute Zähigkeit.

Die bei Polyestern möglichen Formkörperschrumpfungen werden durch den Zusatz der Komponente B) verbessert; auch werden erhöhte E-Module beobachtet. Die Zähigkeit der thermoplastischen Formmassen wird wesentlich vom Anteil der Komponente C) beeinflußt. Das bedeutet, daß thermoplastische Formmassen, die die Komponente C) nicht enthalten, im allgemeinen nur die Zähigkeit aufweisen, die den bekannten Polyesterformmassen oder den entsprechenden Abmischungen mit den Komponenten A) und B) entsprechen.

Bevorzugte thermoplastische Formmassen mit überwiegendem Polyesteranteil enthalten 5 bis 45 Gew.-%, bevorzugt 10 bis 40 Gew.-%, insbesondere 15 bis 35 Gew.-% an thermoplastischem Copolymer B).

Die als Komponente A) eingesetzten thermoplastischen Polyester stellen Reaktionsprodukte dar aus aliphatischen, bevorzugt aromatischen, Dicarbonsäuren oder ihren reaktionsfähigen Derivaten (z.B. den Dimethylestern oder Anhydriden) und aliphatischen, cycloaliphatischen, araliphatischen oder aromatischen Diolen.

Bevorzugt wird als thermoplastischer Polyester ein solcher eingesetzt, der aus Terephthalsäure oder deren reaktionsfähigen Derivaten und Alkandiolen mit 2 bis 10 Kohlenstoffatomen nach bekannten Metho-

2

den hergestellt werden kann (siehe Kunststoffhandbuch, Band 8, Seite 695 ff, Carl Hanser Verlag, München 1973).

Besondere technische Bedeutung haben Polyethylenterephthalat und Polybutylenterephthalat oder deren Mischungen in der Technik erlangt.

Die erfindungsgemäßen Polyester können bis zu 20 Mol-% Anteile enthalten, die sich von anderen Dicarbonsäuren als Terephthalsäure ableiten. Es handelt sich hierbei um aromatische oder cycloaliphatische Dicarbonsäuren mit 8 bis 14 C-Atomen und/oder aliphatischen Dicarbonsäuren mit 4 bis 12 C-Atomen. Genannt werden beispielsweise Phthalsäure, Isophthalsäure, Naphthalin-2,6-dicarbonsäure, Diphenyl-4,4'-dicarbonsäure, Bernsteinsäure, Adipinsäure, Sebacinsäure und/oder Cyclohexandiessigsäure.

Außerdem können die erfindungsgemäßen thermoplastischen Formmassen neben den oben erwähnten Ethylenglykol- und Butandiol-1,4-Resten noch bis zu 20 Mol-% andere aliphatische Diole mit 3 bis 21 C-Atomen oder cycloaliphatische Diole mit 6 bis 21 C-Atomen enthalten. Beispielsweise werden genannt: Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,5, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und/oder 2,2-Bis-(4-hydroxypropoxyphenyl)-propan (siehe z.B. DE-OS 24 07 674, 24 07 776, 27 15 932).

Die bevorzugt als Komponente A) eingesetzten Polyalkylenterephthalate können durch Einbau relativ kleiner Mengen 3- oder 4-wertiger Alkohole oder 3- oder 4-basischer Carbonsäuren, wie sie in der DE-OS 19 00 270 und der US-PS 36 92 744 beschrieben sind, verzweigt werden. Beispiele bevorzugter Verzweigungsmittel sind Trimesinsäure, Trimellitsäure, Trimethylolethan und -propan und/oder Pentaerythrit. Die angeführten Verzweigungsmittel werden üblicherweise in Mengen von bis zu 1 Mol-%, bezogen auf die Säurekomponente eingesetzt.

Besonders bevorzugt werden als Komponente A) Polyalkylenterephthalate eingesetzt, die allein aus Terephthalsäure oder deren reaktionsfähigen Derivate und Ethylenglykol oder Butandiol-1,4 hergestellt worden sind.

Die als Komponente A) in besonders bevorzugter Weise eingesetzten Polyethylenterephthalate besitzen im allgemeinen eine Intrinsic-Viskosität von etwa 0,4 bis 1,5 dl/g, vorzugsweise 0,5 bis 1,3 dl/g, insbesondere 0,6 bis 1,2 dl/g, und die eingesetzten Polybutylenterephthalate eine Intrinsic-Viskosität von 0,7 bis 1,6 dl/g, vorzugsweise 0,8 bis 1,3 dl/g, insbesondere 0,8 bis 1,05 dl/g, jeweils gemessen in Phenol/o-Dichlorbenzol (1:1 Gewichtsteile) bei 25° C.

Will man als Polyesterkomponente A) Polyethylenterephthalat/Polybutylenterephthalat-Mischungen einsetzen, so wählt man vorzugsweise Polyethylenterephthalate mit einer Intrinsic-Viskosität von etwa 0,65 bis 0,9 dl/g und Polybutylenterephthalate mit einer Intrinsic-Viskosität von 0,8 bis 1,4 dl/g und Polyethylenterephthalat/Polybutylenterephthalat-Mischungsverhältnisse von 90:10 bis 10:90 (bezogen auf das Gesamtgewicht). Anstelle von Polyestermischungen lassen sich auch mit gleichem Erfolg die entsprechenden Copolyester einsetzen.

Die erfindungsgemäß als Komponente B) eingesetzten thermoplastischen Copolymere sind solche, die aus

B1) gegebenenfalls substituiertem Styrol, $\alpha$-Methylstyrol, Acrylnitril, Methacrylnitril, Vinyl-$C_1$-$C_4$-carbonsäureestern, Methacrylsäure-$C_1$-$C_8$-alkyl oder $C_5$-$C_6$-cycloalkylestern und/oder Maleinsäurederivaten sowie

B2) mindestens einer epoxydhaltigen Vinylverbindung hergestellt werden.

Bevorzugte Verbindungen B1) sind Styrol, $\alpha$-Methylstyrol, Acrylnitril, Methylmethacrylat, n-Butylmethacrylat, Cyclohexylmethacrylat, Vinylacetat und/oder Maleinsäureanhydrid, besonders bevorzugt $\alpha$-Methylstyrol, Acrylnitril und/oder Methylmethacrylat. Dabei können das Styrol und das $\alpha$-Methylstyrol am aromatischen Ring beispielsweise durch $C_1$-$C_3$-Alkyl-, halogenhaltige (Fluor, Chlor, Brom) $C_1$-$C_3$-Alkylreste und/oder durch Halogene (Fluor, Chlor, Brom) substituiert sein. Bevorzugt sind jedoch die unsubstituierten Verbindungen.

Als epoxydhaltige Vinylverbindungen B2) kommen beispielsweise in Frage Glycidyl(meth)acrylat, Allylglycidylether und/oder Propenylglycidylether, bevorzugt Glycidyl(meth)acrylat.

Thermoplastische Copolymere, die besonders für die Abmischung mit thermoplastischen Polyestern geeignet sind, werden hergestellt aus wenigstens zwei verschiedenen Monomeren aus der Gruppe B1) und wenigstens einem Monomer aus der Gruppe B2). Erwähnt werden beispielsweise Terpolymere, die zwei Verbindungen aus der Gruppe B1) enthalten, wie $\alpha$-Methylstyrol, Styrol, Methylmethacrylat und Acrylnitril und eine Komponente aus der Gruppe B2), wie Glycidyl(meth)-acrylat.

Typischerweise enthalten die thermoplastischen Copolymere B) bis zu 35 Gew.-%, bevorzugt bis zu 20 Gew.-%, insbesondere 1 bis 10 Gew.-%, ganz besonders bevorzugt 1,5 bis 8 Gew.-%, der Monomere der Gruppe B2) einpolymerisiert. Die Gewichtsprozente beziehen sich dabei auf die Summe der einpolymerisierten Verbindungen aus der Gruppe B1). Als thermoplastische Copolymere werden bevorzugt solche als Komponente B) eingesetzt, die Terpolymerisate aus Styrol/Acrylnitril/Glycidyl(meth)acrylat oder α-Methylstyrol/Acrylnitril/Glycidyl(meth)acrylat darstellen. Bevorzugt sind dabei besonders Terpolymerisate aus α-Methylstyrol/Acrylnitril/Glycidyl(meth)acrylat. Die erwähnten Terpolymerisate enthalten 40 bis 80 Gew.-%, bevorzugt 50 bis 75 Gew.-% Styrol und/oder α-Methylstyrol und 10 bis 50 Gew.-%, bevorzugt 20 bis 40 Gew.-%, Acrylnitril sowie bevorzugt 1 bis 10 Gew.-%, besonders bevorzugt 1,5 bis 8 Gew.-% Glycidyl(meth)acrylat (bezogen auf die Summe der einpolymerisierten Verbindungen aus der Gruppe B1)).

Die Herstellung der thermoplastischen Copolymere B) kann grundsätzlich nach den bekannten Verfahren der Copolymerisation in Lösung, Wasser, Suspension, Dispersion sowie Emulsion durch radikalische oder thermische Polymerisationsverfahren erfolgen (siehe z.B. DE-AS 2 724 360). Die Auswahl des Verfahrens und der Verfahrensparameter muß dabei so getroffen sein, daß die Epoxidgruppen im wesentlichen als solche erhalten bleiben.

Die Herstellung der Komponente B) kann vorteilhafterweise durch Substanzpolymerisation durchgeführt werden, wobei folgende Bedingungen in etwa zu beachten sind: Arbeiten unter thermischer oder radikalisch-initiierter Polymerisation bei Temperaturen von ca. 40°C bis 150°C, vorzugsweise 80 bis 130°C, insbesondere unter kontinuierlicher Fahrweise und partiellem Monomerumsatz, so daß das gewonnene Polymer als Lösung im Monomersystem anfällt. Bei diesem Verfahren ist der Zusatz von organischen Lösungsmitteln, die nicht mit der Epoxidgruppe reagieren können, vorteilhaft.

Das Molekulargewicht der Polymere B) kann durch verschiedenste Maßnahmen variiert werden, wie Temperatur, Monomerkonzentration, Startermenge oder durch Einsatz sogenannter Regler, wie Organoschwefel-Verbindungen, z.B. Mercaptane und/oder Disulfide, wobei langkettige Mercaptane (n- und/oder tert.-Dodecylmercaptane) vorteilhaft sind. Die Regler werden normalerweise im Monomergemisch gelöst und die Mischung danach polymerisiert. Vorteilhaft ist eine Molekulargewichtssteuerung durch Kombination mit Monomereinsatzreglung.

Die Molekulargewichte der Copolymerisate B) $\overline{M}_w$ (Gewichtsmittelmolekulargewicht) sollen im Bereich von etwa 30 000 bis 800 000 liegen; ermittelt durch Lichtstreuung oder Sedimentation.

Die erfindungsgemäßen thermoplastischen Formmassen können neben den Komponenten A) und B) noch ein Kautschukpolymerisat als Komponente C) enthalten. Eine Mitverwendung der Komponente C) ist insbesondere dann vorteilhaft, wenn die Formmassen eine gute Tieftemperaturzähigkeit aufweisen sollen. Als Kautschukpolymerisate kommen solche in Frage, die Einfriertemperaturen (Glastemperatur) von kleiner 0°C, insbesondere kleiner -20°C, besitzen. Das zu verwendende Kautschukpolymerisat kann aus der Reihe der Homo-, Co-oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten Kautschukpolymerisaten auszuwählen, die zur Verbesserung der Eigenschaften, insbesondere zur Schlagzähverbesserung von thermoplastischen Polyestern üblicherweise verwendet werden.

Typische Vertreter dieser Klasse sind z.B.: Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Copolymerkautschuke, Dienpolymer/Vinylarylpolymer-Blockcopolymere, wie Styrol/Butadien-Blockcopolymere.

Als Komponente C) eignen sich insbesondere auch Pfropfpolymerisate, die durch Aufpfropfen von Vinylmonomeren auf ein Kautschukpolymerisat, dessen Glastemperatur unter 0°C, vorzugsweise unter -20°C liegt, entstehen. Als Kautschukpolymerisate sind dabei zu erwähnen Polybutadien, Butadien-Acrylester-Copolymere, z.B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Beispielsweise seien als Pfropfpolymerisate solche genannt, die in der DE-OS 23 48 377 beschrieben sind. Zu nennen sind vernetzte Pfropfpolymerisate aus vernetztem Polybutadien als Kautschukkomponente und Styrol/Methylmethacrylat als Pfropfmonomere. Weiterhin eignen sich als Komponente C) gepropfte Acrylat-oder Dienkautschuke mit spezieller Struktur oder solche die nach bestimmten Verfahren hergestellt worden sind (siehe EP-22 216, 50 265, 50 262, 131 202 sowie DE-OS 3 114 772).

Die Pfropfpolymerisate können in ihrer Pfropfhülle zusätzlich auch funktionelle Gruppen enthalten wie Epoxy- oder Carboxylgruppen. Die Verwendung solcher Pfropfpolymerisate auf Butadien- oder Acrylatbasis zur Erhöhung der Schlagzähigkeit von Polyester-haltigen Formmassen bei tiefen Temperaturen ist bei-

4

spielsweise beschrieben in der DE-OS 3 601 421 und 3 602 422.

Als Komponente C) sind die zur Polyestermodifizierung bekannten Pfropfkautschuke von Vinylmonomeren auf teilchenförmige, wenigstens teilvernetzte Butadien- und/oder Acrylsäurealkylesterhomo- oder -copolymerisate mit einer mittleren Teilchengröße ($d_{50}$) von 0,1 bis 1 μm geeignet.

Die erfindungsgemäßen thermoplastischen Formmassen können selbstverständlich auch Zusatzstoffe, wie Gleit-und Entformungsmittel, Nucleierungsmittel, Stabilisatoren, Füll- und Verstärkungsstoffe, Flammschutzmittel, Farbstoffe sowie Thermostabilisatoren, Antioxidantien und/oder Lichtschutzmittel, enthalten. Diese Zusatzstoffe werden in wirksamen Mengen, im allgemeinen bis zu 30 Gew.-%, bezogen auf die Komponenten A) + B) + gegebenenfalls C) verwendet; ihr Anteil kann jedoch auch bis zu 60 Gew.-% betragen (insbesondere bei Füllstoffen).

Die Herstellung der erfindungsgemäßen Formmassen kann durch Mischen der Komponenten in an sich bekannter Weise erfolgen. Geeignete Mischvorrichtungen sind bekannt, weshalb sich hierbei detaillierte Angaben erübrigen.

Wenn auch in den meisten Fällen sämtliche Komponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen. So können die erfindungsgemäßen Formmassen auf bekannten Mischaggregaten hergestellt werden, indem die Komponenten A), B) und gegebenenfalls C) gemeinsam aufgeschmolzen und homogenisiert werden, oder indem das Pfropfpolymerisat C) in die Schmelze des Polyesters A) oder des Gemisches aus A) und B) eingearbeitet wird.

Die Temperatur bei der Herstellung der Mischung sollte mindestens 10° C aber zweckmäßig höchstens 80° C oberhalb des Schmelzpunktes (Erweichungspunktes bei nichtkristallinen Materialien) der Komponente mit der höchsten Schmelz- oder Erweichungstemperatur liegen.

Die erfindungsgemäßen thermoplastischen Formmassen können zur Herstellung von Formkörpern oder Formteilen, wie Stoßfänger, Karosserieteile oder Gehäusematerial für Elektrogeräte, im Spritzguß- oder Extrusionsverfahren verwendet werden.

Beispiele

I. Verwendete Komponenten

A) Polyester

A1:

Polybutylenterephthalat mit einer relativen Viskosität von 1,70 (gemessen in einer o-Dichlorphenol/Benzol(1:1)-Lösung bei 120° C, enthaltend 250 mg/50 ml)

A2:

Polyethylenterephthalat mit einer relativen Viskosität von 1,48 (gemessen in einer o-Dichlorphenol/Benzol(1:1)-Lösung bei 120° C, enthaltend 250 mg/50 ml)

B) Thermoplastisches Copolymerisat

B1:

In einem ummantelten Gefäß, das mit Innenthermometer, Rührer, Ein- und Auslaß versehen ist, wurden 1000 Teile eines Gemisches der Monomere mit der Zusammensetzung 45,2 Gew.-% Styrol, 30 Gew.-% Ethylbenzol, 19,4 Gew.-% Acrylnitril, 5 Gew.-% (2,3-Epoxypropyl)-methacrylat (Glycidylmethacrylat) und 0,4 Gew.-% dimeres α-Methylstyrol vorgelegt und auf 130° C erwärmt. Dann wurde ein Monomerstrom derselben Zusammensetzung so zudosiert und gleichzeitig dieselbe Menge an Polymerlösung dem Gefäß entnommen, daß sich eine Verweilzeit von 0,7 h im Gefäß ergab und der Füllstand gehalten wurde. Dem Monomereintrittsstrom wurden pro 1000 Teile kontinuierlich 13 Teile einer 4 gew.-%igen t-Butyl-per-2-ethylhexanoat- Lösung in Ethylbenzol zugefügt. Nach 3 Stunden hatte sich ein konstanter Feststoff von 34 Gew.-% eingestellt. Die Polymerlösung wurde anschließend auf einem Ausdampfextruder von den nicht umgesetzten Monomeren und dem Lösungsmittel befreit und granuliert.

Das so hergestellte Harz weist eine Intrinsic-Viskosität von 0,55 dl/g, gemessen bei 25° C in DMF, auf, und besteht aus 7,5 Gew.-% (2,3-Epoxypropyl)-methacrylat, 24,4 Gew.-% Acrylnitril und 68,1 Gew.-% Styrol.

B2:

In einem ummantelten Gefäß, das mit Innenthermometer, Rührer, Ein- und Auslaß versehen ist, wurden 1000 Teile eines Gemisches der Monomere mit der Zusammensetzung 74,4 Gew.-% Styrol, 15 Gew.-% Ethylbenzol, 5,6 Gew.-% Acrylnitril und 5 Gew.-% (2,3-Epoxypropyl)-methacrylat (Glycidylmethacrylat) vorgelegt und auf 135° C erwärmt. Dann wurde ein Monomerstrom derselben Zusammensetzung so zudosiert und gleichzeitig dieselbe Menge an Polymerlösung dem Gefäß entnommen, daß sich eine Verweilzeit von 0,8 h im Gefäß ergab und der Füllstand gehalten wurde. Dem Monomereintrittsstrom von 100 Teilen wurden kontinuierlich 8,6 Teile einer 7,5 gew.-%igen t-Butyl-per-2-ethylhexanoat-Lösung in Ethylbenzol zugefügt. Nach 3 Stunden hatte sich ein konstanter Feststoff von 37 Gew.-% eingestellt. Die Polymerlösung wurde anschließend auf einem Ausdampfextruder von den nicht umgesetzten Monomeren und dem Lösungsmittel befreit und granuliert.

Das so hergestellte Harz weist eine Intrinsic-Viskosität von 0,57 dl/g, gemessen bei 25° C in DMF, auf, und besteht aus 8,1 Gew.-% (2,3-Epoxypropyl)-methacrylat, 9,2 Gew.-% Acrylnitril und 82,7 Gew.-% Styrol.

B3:

In einem ummantelten Gefäß, das mit Innenthermometer, Rührer, Ein- und Auslaß versehen ist, wurden 1000 Teile eines Gemisches der Monomere mit der Zusammensetzung 80,0 Gew.-% Styrol, 15,0 Gew.-% Ethylbenzol und 5,0 Gew.-% (2,3-Epoxypropyl)-methacrylat (Glycidylmethacrylat) vorgelegt und auf 125° C erwärmt. Dann wurde ein Monomerstrom von 1000 Teilen derselben Zusammensetzung so zudosiert und gleichzeitig dieselbe Menge an Polymerlösung dem Gefäß entnommen, daß sich eine Verweilzeit von 1 h ergab und der Füllstand im Gefäß gehalten wurde. Dem Monomereintrittsstrom wurden kontinuierlich 26 Teile einer 5,0 gew.-%igen Azo-bis-(isobutyronitril)-Lösung in Ethylbenzol zugefügt. Nach 4,5 Stunden hatte sich ein konstanter Feststoff von 40 Gew.-% eingestellt. Die Polymerlösung wurde anschließend auf einem Ausdampfextruder von den nicht umgesetzten Monomeren und dem Lösungsmittel befreit und granuliert.

Das so hergestellte Harz weist eine Intrinsic-Viskosität von 0,54 dl/g, gemessen bei 25° C in DMF, auf, und besteht aus 9,2 Gew.-% (2,3-Epoxypropyl)-methacrylat und 90,8 Gew.-% Styrol.

B4:

In einem 4-l Planschliffgefäß mit Rührer und Innenthermometer werden 1600 g einer 0,5 %igen Lösung von Polyvinylpyrrolidon (Luviskol K 90) in Wasser vorgelegt, mit Stickstoff gespült und auf 75° C erhitzt. Dann wird eine Mischung aus 380 g Methylmethacrylat, 20 g (2,3-Epoxypropyl)-methacrylat und 4 g Azo-bis-(isobutyronitril) zugesetzt und unter einem Stickstoffstrom mit 300 Upm 3 h bei 75° C gerührt. Anschließend wird 3 h bei 85° C gerührt und abgekühlt. Das Polymerisat wird abfiltriert, mit Wasser gründlich gewaschen und bei 60° getrocknet. Man erhält ca. 350 g eines Perlpolymerisats mit einer Intrinsic-Viskosität von 0,8 dl/g, gemessen bei 25° C in DMF.

Vergleichsharz B5:

Das Vergleichsharz B5 wurde nach der DAS 2 724 360 hergestellt. Es enthält 27,6 Gew.-% Acrylnitril und 62,4 Gew.-% Styrol. Die Intrinsic-Viskosität beträgt 0,55 dl/g bei 25° C in DMF.

II. Herstellung und Prüfung der Formmassen

Die Compoundierung der Komponenten erfolgte auf einem kontinuierlich arbeitenden Doppelwellenextruder der Fa. Werner + Pfleiderer mit der Bezeichnung ZSK 32. Die Produkte wurden bei einer Massetemperatur von 260 bis 270°C, einer Drehzahl von 80 min$^{-1}$ und einem Durchsatz von 8 kg/h gemischt und anschließend granuliert.

Von den Formmassen wurden auf einer üblicher Spritzgußmaschine Prüfstäbe (80 x 10 x 4 mm$^3$) hergestellt.

Die Prüfstäbe wurden mit folgenden Methoden untersucht:

| | |
|---|---|
| Biege-E-Modul: | DIN 53 457 |
| Kerbschlagzähigkeit: | ISO 180 |
| Schlagzähigkeit: | ISO 180 |
| Wärmeformbeständigkeit (Vicat A): | DIN 53 460 |

Die Zusammensetzungen der Formmassen sind in Tabelle 1 aufgeführt, die Prüfdaten in Tabelle 2.

Tabelle 1

| Zusammensetzung der erfindungsgemäßen- und Vergleichs-Formmassen (in Gew.-Teilen) | | | | | | | |
|---|---|---|---|---|---|---|---|
| Beispiel Nr. | A 1 | A 2 | B 1 | B 2 | B 3 | B 4 | B 5 |
| 1 (Vergleich) | 100 | - | - | - | - | - | - |
| 2 (Vergleich) | - | 100 | - | - | - | - | - |
| 3 | 75 | - | 25 | - | - | - | - |
| 4 | - | 75 | 25 | - | - | - | - |
| 5 | 72 | - | - | 28 | - | - | - |
| 6 | 82 | - | - | - | 18 | - | - |
| 7 | 75 | - | - | - | - | 25 | - |
| 8 (Vergleich) | 75 | - | - | - | - | - | 25 |

Tabelle 2

| Eigenschaften der erfindungsgemäßen- und Vergleichs-Formmassen (Zusammensetzung siehe Tabelle 1) | | | | |
|---|---|---|---|---|
| Beispiel Nr. | Biege-E-Modul MPA | Kerbschlagzähigkeit bei RT KJ/m$^2$ | Schlagzähigkeit bei RT KJ/m$^2$ | Vicat A °C |
| 1 (Vergleich) | 2270 | 9,7 | 117** | 229-236 |
| 2 (Vergleich) | 2420 | 7,7 | 103 | 97 |
| 3 | 2900 | 8,9 | 183 | 222 |
| 4 | 2810 | 7,7 | 56 | 229-232 |
| 8 (Vergleich): Prüfkörper inhomogen, delaminiert | | | | |
| ** 5 von 10 Probekörpern nicht gebrochen | | | | |

Die Formmassen der Beispiele 5 bis 7 weisen ähnliche Prüfdaten wie Beispiel 3 auf, jedoch insbesondere die Beispiele 6 und 7 einen helleren Rotton.

Die Formmassen der Beispiele 3 bis 7 ergeben jeweils homogene störungsfreie Prüfkörper. Gegenüber den reinen Polyestern weisen die erfindungsgemäßen Formmassen eine höhere Biegefestigkeit und nahezu gleichbleibende (Kerb)-Schlagzähigkeit auf.

Die Formmasse aus Polybutylenterephthalat mit einem Harzcopolymer ohne Epoxidgruppen [Beispiel 8 (Vergleich)] ergibt dagegen einen inhomogenen Prüfkörper, der Delaminierungen und Unverträglichkeit

zeigt.

**Ansprüche**

1. Thermoplastische Formmassen enthaltend

A) thermoplastische Polyester und

B) thermoplastische Copolymere hergestellt aus

B1) gegebenenfalls substituiertem Styrol, $\alpha$-Methylstyrol, Acrylnitril, Methacrylnitril, Vinyl-$C_1$-$C_4$-carbonsäureestern, Methacrylsäure-$C_1$-$C_8$-alkyl- oder $C_5$-$C_6$-cycloalkylestern und/oder Maleinsäurederivaten und

B2) mindestens einer epoxydhaltigen Vinylverbindung.

2. Thermoplastische Formmassen nach Anspruch 1, dadurch gekennzeichnet, daß die Formmassen neben den Komponenten A) und B) als Komponenten C) noch ein Kautschukpolymerisat enthalten.

3. Formkörper hergestellt aus Formmassen nach den Ansprüchen 1 und 2.